# FASCICULE DE BREVET EUROPEEN

(11) **EP 0 991 162 B1**
(45) Date de publication et mention de la délivrance du brevet: **18.01.2006**
(21) Numéro de dépôt: 99119215.4
(22) Date de dépôt: 25.09.1999
(51) Int. Cl.: H02K 1/22, H02K 21/04

(54) **Alternateur pour véhicule avec rattrapage de jeu sur les aimants interpolaires**
Wechselstromgenerator für Kraftfahrzeuge mit Vorrichtung zur Spielbeseitigung von Zwischenpol-Magneten
Alternator for vehicle with interpolar magnets play compensation

(30) Priorité: 02.10.1998 FR 9812359
(43) Date de publication de la demande: 05.04.2000
(73) Titulaire: VALEO EQUIPEMENTS ELECTRIQUES MOTEUR, 94017 Creteil (FR)
(72) Inventeur: Armiroli, Paul, 94440 Marolles en Brie (FR); Badey, Jean-Philippe, 62630 Etaples (FR); Gravat, Denis, 77320 La Ferte-Gaucher (FR)

(56) Documents cités:
- EP-A- 0 425 132
- EP-A- 0 762 617
- EP-A- 0 837 538
- US-A- 4 302 693
- US-A- 5 306 977
- US-A- 5 734 216
- US-A- 5 747 913
- PATENT ABSTRACTS OF JAPAN vol. 098, no. 008, 30 juin 1998 (1998-06-30) & JP 10 066286 A (HITACHI LTD), 6 mars 1998 (1998-03-06)
- "ALTERNATING CURRENT GENERATOR WITH HIGH SPEED IMPROVEMENT" RESEARCH DISCLOSURE, no. 397, 1 mai 1997 (1997-05-01), page 328 XP000726444 ISSN: 0374-4353

## Description

L'invention concerne les alternateurs de véhicules automobiles.

On connaît d'après le document EP-0 762 617 A1 un alternateur pour véhicule, comprenant des pièces polaires présentant des pôles en forme de griffes entrelacés, et des aimants permanents interpolaires interposés entre les griffes adjacentes. Les aimants réduisent les fuites de flux magnétique et contribuent à renforcer le flux magnétique. Lorsque les tolérances de fabrication des pièces sont relativement larges pour réduire les coûts, il arrive qu'un aimant intérpolaire se casse sous l'effet des efforts centrifuges et des échauffements considérables engendrés par la rotation du rotor à vitesse élevée (ouverture des cornes polaires).

On connaît également du document EP0425 132 A1 un alternateur comportant des pôles entrelacés et au moins un aimant, les pôles présentant des rainures profilées et recevant l'aimant, le profil interdisant toute sortie de l'aimant hors des rainures dans un plan perpendiculaire à l'axe. Enfin, le document US 4, 747,913 présente une lame interposée entre une face de l'aimant et une rainure.

Un but de l'invention est de fournir un alternateur permettant la fixation des aimants tout en réduisant le risque de casser l'aimant sans nécessiter des tolérances de fabrication très fines et permettant d'amortir les déformations et de rattrapper les jeux.

En vue de la réalisation de ce but, on prévoit selon l'invention un alternateur pour véhicule, comprenant deux pièces polaires présentant des pôles entrelacés et un aimant, les pôles présentant des rainures profilées suivant un axé et recevant l'aimant, le profil interdisant toute sortie de l'aimant hors des rainures dans un plan perpendiculaire à l'axe, caractérisé en ce qu'il comprend une lame interposée entre une face de l'aimant et au moins une des rainures, la lame étant réalisée en un matériau moins dur que l'aimant. et en ce qu'il comprend une couche de colle plus souple que l'aimant interposée entre la lame et l'aimant.

Ainsi, de par sa souplesse, la lame rattrape les jeux dus aux tolérances de fabrication et absorbe les déformations des pièces dues aux échauffements et aux efforts générés par les vitesses de rotation élevées. Cela réduit le risque de casser l'aimant.

Avantageusement, la lame est interposée entre l'aimant et chacune des rainures.

Ainsi, la lame assure dans chaque rainure un rattrapage de jeu suivant un axe radial à l'arbre du rotor.

Avantageusement, la lame recouvre une face circonférentielle de l'aimant.

Ainsi, la disposition de l'aimant dans les rainures demeure symétrique par rapport à un plan longitudinal médian de l'espace interpolaire situé à mi-distance des pôles. On préserve donc la symétrie du champ magnétique.

Avantageusement, la face circonférentielle est orientée en direction opposée à un arbre de l'alternateur.

Ainsi, on privilégie un positionnement de l'aimant le plus près possible de l'entrefer.

Avantageusement, l'alternateur comprend deux lames interposées entre des faces respectives opposées de l'aimant et au moins une des rainures.

Avantageusement, l'aimant comporte deux parties disjointes reliées l'une à l'autre par une couche de matériau plus souple que l'aimant.

Ainsi, on assure un rattrapage des jeux et un amortissement des déformations supplémentaires, dans une direction qui peut être différente de la direction de rattrapage des jeux associée à la lame.

Avantageusement, le matériau est identique à la colle reliant la lame à l'aimant.

Avantageusement, le profil de chaque rainure est en « U ».

Avantageusement, le profil de chaque rainure est en « V », le profil en « V » ayant une branche localement parallèle à une face circonférentielle des pôles.

Avantageusement, le « V » présente deux branches, la branche parallèle étant plus proche d'un arbre de l'alternateur que l'autre branche.

Avantageusement, l'alternateur comprend plusieurs aimants, au moins deux des aimants, voire une majorité, de préférence une totalité, étant associés à des lames respectives.

Avantageusement, les lames des aimants respectifs sont indépendantes les unes des autres.

Ainsi, les lames peuvent être montées séparément et successivement.

D'autres caractéristiques et avantages de l'invention apparaîtront encore dans la description suivante de plusieurs modes préférés de réalisation donnés à titre d'exemples non limitatifs. Aux dessins annexés :
- la figure 1 est une vue partielle en élévation d'un rotor d'un alternateur selon l'invention ;
- la figure 2 est une vue partielle en coupe selon la ligne II-II du rotor de la figure 1 ; et
- les figures 3, 4 et 5 sont des vues analogues à la figure 2 illustrant d'autres modes de réalisation.

Dans le présent mode de réalisation, l'alternateur électrique pour véhicule automobile selon l'invention est destiné à être refroidi par eau en étant intégré dans la boucle du circuit de refroidissement du véhicule de façon connue en soi. L'alternateur peut être intégré par exemple à cette fin en série ou en parallèle avec le radiateur de chauffage de l'habitacle. Alternativement, il peut s'agir d'un alternateur à ventilation interne.

L'alternateur comporte un stator et un rotor 2 muni d'un arbre d'axe 4, qui sont d'un type classique connu en soi, par exemple du document EP-0 762 617, sauf en ce qui concerne les pôles et les aimants interpolaires. Le rotor comporte deux pièces polaires 6 comprenant chacune un plateau 8 en forme de disque monté coaxialement sur l'arbre. Les deux plateaux 8 s'étendent en coïncidence et parallèlement l'un à l'autre.

Chaque pièce polaire 6 comporte des pôles 10 en forme de griffe, généralement plats et triangulaires, s'étendant à partir du plateau 8 en direction de l'autre plateau. Les pôles des pièces polaires sont entrelacés mutuellement de sorte que la pointe de chaque pôle 10 s'étend très près du plateau 8 de l'autre pièce polaire.

Les deux pièces polaires 6 sont associées aux pôles magnétiques respectifs Nord et Sud. Chaque pôle 10 présente deux faces circonférentielles respectivement externe convexe 12 et interne concave 14, et deux faces latérales planes 16 formant deux des côtés du triangle et contiguës aux faces circonférentielles. Les faces latérales 16 des pôles 10 s'étendent en regard et à distance les unes des autres. Une telle disposition est connue en soi.

Dans le présent mode de réalisation, chaque face latérale 16 présente une rainure 18 ou gorge à profil en « U », la rainure ayant un axe 21 s'étendant suivant une direction longitudinale de la face latérale 16. La gorge 18 présente un fond plat et deux flancs perpendiculaires à celui-ci.

Le rotor comporte des aimants permanents 20 ayant ici une forme générale en parallélépipède rectangle et notamment un profil rectangulaire perpendiculairement à une direction longitudinale de l'aimant. Chaque aimant 20 est reçu entre les faces latérales 16 de deux pôles 10 respectifs avec ses faces latérales 22 dans les gorges 18 avec interposition éventuelle d'une couche de colle au fond des gorges.

Chaque aimant 20 est polarisé Nord-Sud suivant une direction s'étendant de l'une à l'autre de ses faces latérales 22.

Chaque paire de rainures 18 en regard l'une de l'autre définissent un logement d'aimant 20, le profil des rainures interdisant à l'aimant de sortir du logement dans un plan perpendiculaire à un axe 21 des rainures une fois que les pôles 10 sont entrelacés mutuellement. Pour introduire un aimant dans son logement ou de l'en extraire, on peut par exemple le faire coulisser parallèlement à l'axe 21 des rainures jusqu'à l'extrémité axiale du logement.

Le rotor 2 comprend pour chaque aimant 20 une lame 24 ou plaquette en un matériau moins dur et plus souple que le matériau de l'aimant. Il s'agit ici, de fibres de verre noyées dans une matière plastique preimprégnée. La lame 24 est plate rectangulaire et a les mêmes dimensions et la même forme que la face circonférentielle externe 25 de l'aimant 20 qu'elle recouvre avec ses bords en coïncidence. Une couche 26 de colle plus souple que l'aimant 20 est interposée entre l'aimant 20 et la lame 24. La lame 24 et la couche de colle 26 s'étendent chacune dans les deux rainures 18 en étant interposées entre la face externe circonférentielle 25 de l'aimant et l'un des flancs de la rainure 18. La face externe circonférentielle 25 de l'aimant est orientée en direction opposée à l'arbre du rotor, au contraire de la face interne circonférentielle 27 de l'aimant qui est orientée vers cet arbre.

Grâce à la souplesse de la lame 24 et de la couche de colle 26, on assure suivant une direction radiale à l'axe 4 du rotor un rattrapage des jeux dûs aux tolérances de fabrication. En outre, lorsque le rotor tourne à des vitesses élevées, on amortit les déformations des pièces dues aux efforts et à l'échauffement provoqués par la rotation du rotor.

Pour le montage, on peut coller à chaque aimant 20 la lame 24 puis introduire l'ensemble ainsi constitué dans son logement.

Alternativement, on peut introduire chaque aimant 20 dans son logement, puis introduire la lame 24 dans le logement et la coller à l'aimant à cette occasion.

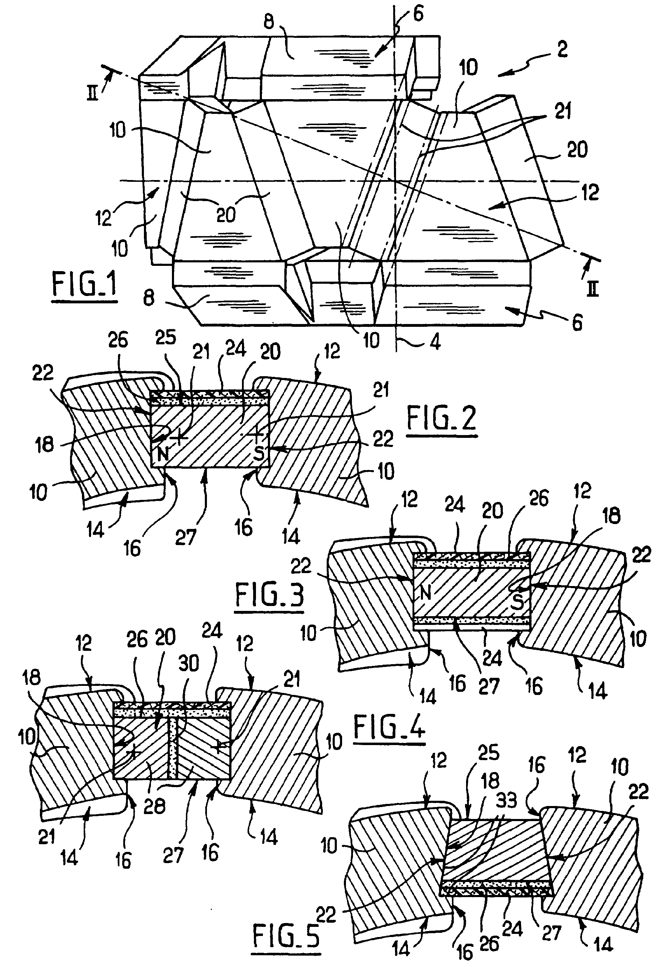

Dans le mode de réalisation de la figure 3, le rotor comprend en outre pour chaque aimant 20 une deuxième lame 24 recouvrant la face interne circonférentielle 27 de l'aimant 20 avec interposition d'une couche de colle 26, lame et couche de colle étant analogues à celles de la figure 2.

Dans le mode de réalisation de la figure 4, l'aimant comprend une seule lame 24, comme sur la figure 2. L'aimant 20 comprend cette fois deux parties d'aimant disjointes 28 reliées directement l'une à l'autre par une couche 30 d'un matériau plus souple que l'aimant. Il pourra par exemple s'agir d'une colle siliconée comprenant avantageusement du fer pour assurer une meilleure continuité magnétique à travers la couche de colle 30. Les deux parties d'aimant 28 ont chacune une forme en parallélépipède rectangle et sont identiques entre elles dans leur forme et leurs dimensions. La couche 30 s'étend dans un plan longitudinal médian de l'aimant, à mi-distance de chacun des deux pôles 10, perpendiculairement à la direction de polarisation de l'aimant et parallèlement à l'axe 21 des rainures.

Cette séparation de l'aimant en deux parties 28 assure elle aussi un rattrapage des jeux et une compensation des déformations, mais dans une direction non parallèle, ici perpendiculaire, à celle associée à la lame 24.

Dans le mode de réalisation de la figure 5, l'aimant 20 est analogue à celui de la figure 2, mais la lame 24 recouvre sa face circonférentielle interne 27 et non sa face circonférentielle externe.

Les rainures 18 ont cette fois un profil en « V » à deux branches 33 inclinées l'une par rapport à l'autre. Celle 33 des deux branches qui est la plus proche de l'axe 4 du rotor est parallèle localement aux faces circonférentielles 12, 14 des pôles. La lame 24 est interposée entre l'aimant 20 et le flanc de la rainure défini par cette branche 33 du profil. L'aimant 20 a un profil trapézoïdal. Le plus grand 27 des deux côtés 25, 27 du trapèze qui sont parallèles entre eux s'étend contre les flancs 33 des rainures 18 les plus proches de l'arbre du rotor. Les deux autres côtés 22 du trapèze sont en contact surfacique avec les autres flancs des rainures 18.

Bien que cela soit moins avantageux, la lame 24 pourra s'étendre entre une face latérale 22 de l'aimant 20, et l'un des pôles 10, dans l'un quelconque de ces modes de réalisation.

La lame 24 pourra être constituée en deux parties disjointes suivant une ligne médiane, distantes l'une de l'autre et logées chacune dans l'une des rainures 18.

Avantageusement, la couche de colle 26, 30 sera la même que celle interposée entre les gorges 18 et les faces latérales 22 des aimants.

## Revendications

1. Alternateur pour véhicule, comprenant deux pièces polaires (6) présentant des pôles entrelacés (10) et au moins un aimant (20), les pôles présentant des rainures (18) profilées suivant un axe (21) et recevant l'aimant, le profil interdisant toute sortie de l'aimant hors des rainures dans un plan perpendiculaire à l'axe (21), **caractérisé en ce qu'**il comprend une lame (24) interposée entre une face (25, 27) de l'aimant et au moins une des rainures (18), la lame (24) étant réalisée en un matériau moins dur que l'aimant et **en ce qu'**il comprend une couche d'une colle (26) plus souple que l'aimant interposée entre la lame (24) et l'aimant (20).

2. Alternateur selon la revendication 1, **caractérisé en ce que** la lame (24) est interposée entre l'aimant (20) et chacune des rainures (18).

3. Alternateur selon la revendication 1 ou 2, **caractérisé en ce que** la lame (24) recouvre une face circonférentielle (25, 27) de l'aimant.

4. Alternateur selon la revendication 3, **caractérisé en ce que** la face circonférentielle (25) est orientée en direction opposée à un arbre de l'alternateur.

5. Alternateur selon l'une quelconque des revendications 1 à 4, **caractérisé en ce qu'**il comprend deux lames (24) interposées entre des faces respectives opposées (25, 27) de l'aimant (20) et au moins une des rainures (18).

6. Alternateur selon l'une quelconque des revendications 1 à 5, **caractérisé en ce que** le profil de chaque rainure (18) est en « U ».

7. Alternateur selon l'une quelconque des revendications 1 à 5, **caractérisé en ce que** le profil de chaque rainure (18) est en « V », le profil en « V » ayant une branche (33) localement parallèle à une face circonférentielle (12, 14) des pôles (10).

8. Alternateur selon la revendication 7, **caractérisé en ce que** le profil en « V » présente deux branches (30), ladite branche parallèle (33) étant plus proche d'un arbre de l'alternateur que l'autre branche.

9. Alternateur selon l'une quelconque des revendications 1 à 8, **caractérisé en ce que** l'aimant (20) comporte deux parties disjointes (28) reliées l'une à l'autre par une couche de matériau (30) plus souple que l'aimant.

10. Alternateur selon les revendications 8 et 9, **caractérisé en ce que** le matériau (30) est identique à la colle (26).

11. Alternateur selon l'une quelconque des revendications 1 à 10, **caractérisé en ce qu'**il comprend plusieurs aimants (20), au moins deux des aimants étant associés à des lames (24) respectives.

12. Alternateur selon la revendication 11, **caractérisé en ce qu'**une majorité des aimants (20), de préférence une totalité des aimants, sont associés à des lames (24) respectives.

13. Alternateur selon l'une quelconque des revendications 11 ou 12, **caractérisé en ce que** les lames (24) des aimants respectifs (20) sont indépendantes les unes des autres.

## Patentansprüche

1. Wechselstromgenerator für Kraftfahrzeuge, umfassend zwei Polteile (6), die ineinander verzahnte Pole (10) aufweisen, und wenigstens einen Magneten (20), wobei die Pole Nuten (18) aufweisen, die entlang einer Achse (21) profiliert sind und den Magneten aufnehmen, wobei das Profil jedes Austreten des Magneten aus den Nuten in einer zur Achse (21) senkrechten Ebene verhindert, **dadurch gekennzeichnet, dass** er eine zwischen einer Fläche (25, 27) des Magneten und wenigstens einer der Nuten (18) eingefügte Leiste (24) umfasst, wobei die Leiste aus einem Werkstoff ausgeführt ist, der weniger hart als der Magnet ist, und dass er eine zwischen der Leiste (24) und dem Magneten (20) eingefügte Schicht aus einem Klebstoff (26) umfasst, der biegsamer als der Magnet (20) ist.

2. Wechselstromgenerator nach Anspruch 1, **dadurch gekennzeichnet, dass** die Leiste (24) zwischen dem Magneten (20) und jeder der Nuten (18) eingefügt ist.

3. Wechselstromgenerator nach Anspruch 1 oder 2, **dadurch gekennzeichnet, dass** die Leiste (24) eine Umfangsfläche (25, 27) des Magneten bedeckt.

4. Wechselstromgenerator nach Anspruch 3, **dadurch gekennzeichnet, dass** die Umfangsfläche (25) in Gegenrichtung zu einer Welle des Wechselstromgenerators ausgerichtet ist.

5. Wechselstromgenerator nach einem der Ansprüche 1 bis 4, **dadurch gekennzeichnet, dass** er zwei Leisten (24) umfasst, die zwischen jeweils gegenüberliegenden Flächen (25, 27) des Magneten (20) und wenigstens einer der Nuten (18) eingefügt sind.

6. Wechselstromgenerator nach einem der Ansprüche 1 bis 5, **dadurch gekennzeichnet, dass** das Profil jeder Nut (18) "U"-förmig ausgebildet ist.

7. Wechselstromgenerator nach einem der Ansprüche 1 bis 5, **dadurch gekennzeichnet, dass** das Profil jeder Nut (18) "V"-förmig ausgebildet ist, wobei das "V"-förmige Profil einen Schenkel (33) aufweist, der örtlich parallel zu eine Umfangsfläche (12, 14) der Pole (10) verläuft.

8. Wechselstromgenerator nach Anspruch 7, **dadurch gekennzeichnet, dass** das "V"-förmige Profil zwei Schenkel (30) aufweist, wobei der besagte parallele Schenkel (33) näher an einer Welle des Wechselstromgenerators liegt als der andere Schenkel.

9. Wechselstromgenerator nach einem der Ansprüche 1 bis 8, **dadurch gekennzeichnet, dass** der Magnet (20) zwei getrennte Teile (28) umfasst, die durch eine Schicht aus einem Material (30) miteinander verbunden sind, das biegsamer als der Magnet ist.

10. Wechselstromgenerator nach den Ansprüchen 8 und 9, **dadurch gekennzeichnet, dass** das Material (30) mit dem Klebstoff (26) identisch ist.

11. Wechselstromgenerator nach einem der Ansprüche 1 bis 10, **dadurch gekennzeichnet, dass** er mehrere Magnete (20) umfasst, wobei wenigstens zwei der Magnete mit jeweiligen Leisten (24) verbunden sind.

12. Wechselstromgenerator nach Anspruch 11, **dadurch gekennzeichnet, dass** eine Mehrzahl der Magnete (20), vorzugsweise eine Gesamtheit der Magnete, mit jeweiligen Leisten (24) verbunden sind.

13. Wechselstromgenerator nach einem der Ansprüche 11 oder 12, **dadurch gekennzeichnet, dass** die Leisten (24) der jeweiligen Magnete (20) unabhängig voneinander sind.

## Claims

1. An alternator for a motor vehicle, comprising two pole pieces (6) having interlaced poles (10) and at least one magnet (20), the poles having grooves (18) which are profiled along an axis (21) and which receive the magnet, the profile preventing any exit of the magnet out of the grooves in a plane at right angles to the axis (21), **characterised in that** it includes a shim (24) interposed between one face (25, 27) of the magnet and at least one of the grooves (18), the shim (24) being made of a less hard material than the magnet, and **in that** it includes a layer of an adhesive (26), more flexible than the magnet and interposed between the shim (24) and the magnet (20).

2. An alternator according to Claim 1, **characterised in that** the shim (24) is interposed between the magnet (20) and each of the grooves (18).

3. An alternator according to Claim 1 or Claim 2, **characterised in that** the shim (24) overlies a circumferential face (25, 27) of the magnet.

4. An alternator according to Claim 3, **characterised in that** the circumferential face (25) is oriented in a direction opposed to a shaft of the alternator.

5. An alternator according to any one of Claims 1 to 4, **characterised in that** it has two shims (24) interposed between the respective opposed faces (25, 27) of the magnet (20) and at least one of the grooves (18).

6. An alternator according to any one of Claims 1 to 5, **characterised in that** the profile of each groove (18) is U-shaped.

7. An alternator according to any one of Claims 1 to 5, **characterised in that** the profile of each groove (18) is V-shaped, the V profile having a branch (33) which is locally parallel to a circumferential face (12, 14) of the poles (10).

8. An alternator according to Claim 7, **characterised in that** the V-shaped profile has two branches (30), the said parallel branch (33) being closer to a shaft of the alternator than the other branch.

9. An alternator according to any one of Claims 1 to 8, **characterised in that** the magnet (20) comprises two separate parts (28) which are connected to each other by a layer of a material (30) which is more flexible than the magnet.

10. An alternator according to Claims 8 and 9, **characterised in that** the material (30) is identical to the adhesive (26).

11. An alternator according to any one of Claims 1 to 10, **characterised in that** it comprises a plurality of magnets (20), at least two of the magnets being associated with respective shims (24).

12. An alternator according to Claim 11, **characterised in that** a majority of the magnets (20), and preferably all of the magnets, are associated with respective shims (24).

13. An alternator according to Claim 11 or Claim 12, **characterised in that** the shims (24) of the respective magnets (20) are independent of each other.
